# EUROPÄISCHE PATENTANMELDUNG

(11) **EP 1 728 713 A2**
(43) Veröffentlichungstag der Anmeldung: **06.12.2006**
(21) Anmeldenummer: 06011043.4
(22) Anmeldetag: 30.05.2006
(51) Int. Cl.: B62L 5/00

(54) **Tretlager für Fahrräder**

(30) Priorität: 01.06.2005 EP 05011787
(71) Anmelder: Trommlitz, Joachim, 42651 Solingen (DE)
(72) Erfinder: Trommlitz, Joachim, 42651 Solingen (DE)
(74) Vertreter: Bracht, Lothar

(57) **Zusammenfassung**

Gezeigt ist ein Tretlager (1) für Fahrräder mit einer Rücktrittbremse, mit zwei Kupplungen (10, 16), wovon eine die Tretlagerwelle (3) mit der Rücktrittbremse verbindet und die andere die Tretlagerwelle (3) mit mindestens einem Zahnkranz (7) für die Fahrradkette verbindet, wobei eine oder beide Kupplungen (10, 16) als Konus-Kupplungen ausgebildet sind, die Tretlagerwelle (3) mit einem Schraubgewinde (59) und mit einem dieses einschließenden Schiffchen (18) versehen ist, das ein entsprechendes Innengewinde aufweist und wobei das Schiffchen (18) die beiden Kupplungen (10, 16) alternativ ein- und auskuppelt und wobei das Schiffchen (18) reibschlüssig gegen Mitdrehen mit der Tretlagerwelle (3) gebremst wird, dergestalt, daß die reibschlüssige Bremsung des Schiffchens (18) durch die aus dem Eigengewicht des Schiffchens (18) resultierende Reibkraft notwendig gefördert wird.

## Beschreibung

Die Erfindung betrifft ein Tretlager für Fahrräder, mit einer Rücktrittbremse, mit zwei Kupplungen, wovon eine die Tretlagerwelle mit der Rücktrittbremse verbindet und die andere die Tretlagerwelle mit den Zahnkränzen für die Fahrradkette verbindet, wobei eine oder beide Kupplungen als Konus-Kupplungen ausgebildet sind und die Tretlagerwelle mit einem Schraubgewinde und mit einem dieses einschließenden Schiffchen versehen ist, das ein entsprechendes Innengewinde aufweist und wobei das Schiffchen die beiden Kupplungen alternativ ein- und auskuppelt und wobei das Schiffchen reibschlüssig gegen Mitdrehen mit der Tretlagerwelle gebremst wird.

In früherer Zeit war es üblich, daß alle Fahrräder einen Rücktritt hatten. Diese Art Bremse ist sehr komfortabel und für den Alltagsgebrauch besonders sicher. Die Hände konnten während des Bremsvorgangs die Lenkstange vollständig und fest umgreifen. Die Bremse war in die Nabe des Hinterrades integriert. Die Bremse wurde durch die Kette und durch die Pedalbewegung betätigt.

Bis heute gibt es zwei Entwicklungen von Gangschaltungen für Fahrräder, nämlich die Nabenschaltungen und die Kettenschaltung. Technisch ist es gelungen, die Nabenschaltung und die Rücktrittbremse gemeinsam in die Hinterradnabe zu integrieren. Es gibt auch heute noch zahlreiche Fahrräder, die mit kombinierter Rücktrittbremse und Gangschaltung in der Hinterradnabe verkauft werden.

Bei den Kettenschaltungen ist diese Kombination von Rücktrittbremse und Schaltung bisher nur auf dem Papier gelungen, wie nachstehend ausgeführt wird. Es besteht durchaus ein Bedarf, eine Rücktrittbremse mit einer Kettenschaltung zu kombinieren. Zumal seit einiger Zeit Lenker in der Praxis Verwendung finden, die 8-förmig ausgebildet sind, um dem Fahrer eine Variation der Handhaltung bei der Fahrt zu erlauben. Gleiches gilt für die sogenannten "Lenkerhörnchen". Dabei entfernen sich zwangsläufig die Hände der Fahrers von den Handbremsen. Das birgt ein erhöhtes Sicherheitsrisiko, weil die Reaktionszeit zum Bremsen wesentlich erhöht wird.

Aus der US 1440017 ist das eingangs erwähnte Tretlager für Fahrräder bekannt. Innerhalb des Tretlagergehäuses trägt die Tretlagerwelle einen Gewindeabschnitt, der von einem Schiffchen eingeschlossen ist, das außen zwei sich zu den Längsenden des Schiffchens hin sich verjüngende konische Abschnitte trägt, die je nach Drehrichtung der Tretlagerwelle in einen Innenkonus einer Fahrkupplung oder in einen Innenkonus einer Bremskupplung eingreifen. Zwischen diesen beiden äußeren Stellungen zum Verbinden der Tretlagerwelle mit der Fahrkupplung oder mit der Bremskupplung gibt es eine neutrale Stellung des Schiffchens. In dieser neutralen Stellung wird das Schiffchen in seiner Längsmitte außen zwischen den beiden konischen Abschnitten in einem zylindrischen Bereich von einem Bremsband umspannt, das mit einem nach außen abstehenden Zapfen in ein Loch in der Gehäusewand eingreift und so eine Bremswirkung auf das Schiffchen ausübt. In der neutralen Stellung des Schiffchens verhindert das Bremsband eine Drehung des Schiffchens um seine Längsachse und führt bei einer Drehbewegung der Tretlagerwelle das Schiffchen in die eine oder andere Kupplungsstellung -- je nach Drehrichtung der Tretlagerwelle. Nachteilig bei dieser Lösung ist, daß das Bremsband auch im Fahrbetrieb ständig schleift und damit den Fahrvorgang belastet und die gesamte Reibbremse einem erhöhten Verschleiß unterliegt.

Der Erfindung liegt von daher die Aufgabe zugrunde, ein Tretlager-Kupplungssystem zu schaffen, das ohne Energieverlust an der Fahrkupplung im eingekuppelten Zustand auskommt.

Die Lösung dieser Aufgabe ist im Anspruch 1 wiedergegeben. Dabei erfolgt die Bremswirkung auf das Schiffchen in seiner ausgekuppelten, neutralen Stellung hauptsächlich oder ausschließlich aufgrund der Reibung, die das Eigengewicht des Schiffchens mit Innengewinde auf seine Unterlage ausübt. Im wesentlichen liegt das Schiffchen in seiner neutralen Stellung zwischen den beiden Kupplungsstellungen auf einer von der Tretlagerwelle und deren Drehbewegung abgekuppelten Unterlage auf.

Das Schiffchen liegt in seiner neutralen Stellung in unmittelbarer Nähe seiner Kupplungsposition in mindestens einem Konus mit seinem Eigengewicht oder Teilen davon auf. Die so entstehende Reibkraft ist ausreichend für die Initiierung des Kupplungsvorgangs. Das Schiffchen wird durch die Reibkraft in seiner Drehlage gehalten, während seine Axialposition durch Drehung der Tretlagerwelle verändert wird, mit dem Ziel des Einkuppelns der Fahrkupplung oder der Bremskupplung. Die eigentliche Reibungsbremse für das Fahrrad liegt außerhalb des Tretlagers. Die Fahrradbremse(n) werden von bekannten Felgenbremsen oder Scheibenbremsen gebildet, nur die Betätigungsmittel für die Bremsen befinden sich im Tretlager. Unter Betätigungsmitteln für die Bremse werden in erster Linie die Fahr- und die Bremskupplung verstanden, sowie die besondere Gestaltung der Tretlagerwelle mit ihrem Außengewinde und der aus dem Tretlager herausgeführte Bremshebel. Auch die klassische Rücktrittbremse in der Hinterradnabe kann von den aus dem Tretlagergehäuse herausgeführten Betätigungsmitteln gesteuert werden.

Diese Betätigungsmittel können von einem radial aus dem Tretlager herausgeführten Bremshebel gebildet werden, der um die Tretlagerachse schwenkbar ist. Weiterhin besteht die Möglichkeit, eine über der Tretlagerwelle herausgeführte Hohlwelle, die die Tretlagerwelle einschließt, mit einem Hebelarm zu versehen, der an eine mechanische oder hydraulische Bremse am Fahrrad angeschlossen ist. Vorzugsweise ist daran gedacht, die üblicherweise vorhandenen Bremsen an Vorderrad und Hinterrad gleichzeitig mit den Betätigungsmitteln am Tretlager zu betätigen. Der Rücktritt wird dadurch zu einer Integralbremse, deren Verzweigung auf die beiden Räder so ausgebildet ist, daß am Vorderrad mehr Bremskraft aufgebracht wird als am Hinterrad. Diese Aufteilung kann mechanisch durch eine Bremswippe erfolgen, wie sie von der Handbremse im Automobil bekannt ist. Bei einer hydraulischen Lösung soll ausgehend von den Bremsbetätigungsmitteln ein Paar von Hydraulikzylindern angesteuert werden, die unterschiedliche Kolbenflächen haben und dadurch beim Bremsvorgang unterschiedliche Bremskräfte auf Vorderrad und Hinterrad aufbringen. Dabei soll das Vorderrad zwischen 60% und 80% der Bremskraft übernehmen.

Nach der Erfindung hat das Schiffchen zwischen den beiden Konen für Fahrt und Bremsen qualitativ jeden Freiheitsgrad. Quantitativ sind alle Freiheiten im 1/10 mm-Bereich begrenzt. Das Schiffchen kann auf der Tretlagerwelle und zwischen den Konen taumeln, wie in einem Käfig.

Schließlich kann das Schiffchen als Rohrstück mit zwei Innenkonen und dazwischen liegendem Muttergewinde ausgebildet sein und die Brems- und die Fahrkupplungshälften sind mit je einem Außenkonus ausgebildet.

In erster Linie ist daran gedacht, die Erfindung so weiterzubilden, daß das Schiffchen im ausgekuppelten Zustand auf Kupplungselementen aufliegt. Diese Weiterbildung hat den Vorzug, daß keine zusätzlichen Teile im Tretlager vorgesehen werden müssen, um die Drehbewegung des Schiffchens abseits der Kupplungsstellungen zu verhindern. In zusätzlicher Weiterbildung der Erfindung ist vorgesehen, daß das Schiffchen in seiner exakt mittigen, neutralen Stellung auf dem Gehäuse des Tretlagers oder einem daran befestigten Auflager liegt.

Dadurch wird die (Nicht-)Drehbewegung des Schiffchens noch besser kontrollierbar. Das Auflager ist aufgrund des geringen Hubes des Schiffchens sehr schmal und kann das Schiffchen auf ein und derselben Umfangslinie wie eine Halbschale unterstützten. Auch eine V-Form des Auflagers, die das Schiffchen mit Keilwirkung trägt und so die Klemm- und die Reibkraft erhöht, fördert den erfinderischen Bremseffekt auf das Schiffchen.

In Ausgestaltung der Erfindung ist vorgesehen, daß das Schiffchen mit der Tretlagerwelle mit einem Radialspiel in gewindlicher Verbindung steht, wobei das Radialspiel größer ist als ein Viertel der Gewindetiefe. Bei einem einfachen Konuswinkel von fünfzehn Winkelgrad oder mehr wird vorgeschlagen, das Radialspiel des Schiffchens auf der Tretlagerwelle größer als ein Drittel der Gewindetiefe zu wählen. Damit wird erreicht, daß über den gesamten Axialhub des Schiffchens ― ausgenommen die Endlagen /Kupplungspositionen des Axialhubs des Schiffchens -- dieses nicht mit seinem Gewicht auf der Tretlagerwelle aufliegt, sondern auf nicht von der Tretlagerwelle mitgenommenen Teilen des Tretlagers.

In weiterer Ausgestaltung der Erfindung ist vorgesehen, daß das Auflager dem Schiffchen in seiner neutralen Stellung gegenüber den Nachbarpositionen eine erhöhte Position verleiht und das Schiffchen von der Tretlagerwelle im Rahmen seines Spiels abhebt. Das Auflager kann an seiner Kontaktfläche mit dem Schiffchen schräg ausgebildet sein, um eine Vorzugsrichtung für die Axialbewegung des Schiffchens zu definieren, die bei Erschütterungen eine unerwünschte Kontaktierung mit den Kupplungskonen vermeidet.
Die Erfindung wird im einzelnen anhand der Zeichnung
erläutert. Dabei zeigen
- Fig. 1 :: Ein Tretlager nach der Erfindung in Rücktrittstellung im Längsschnitt;
- Fig. 2 :: Das Tretlager aus Fig.1 mit dem Schiffchen in einer neutralen Stellung im Längsschnitt.

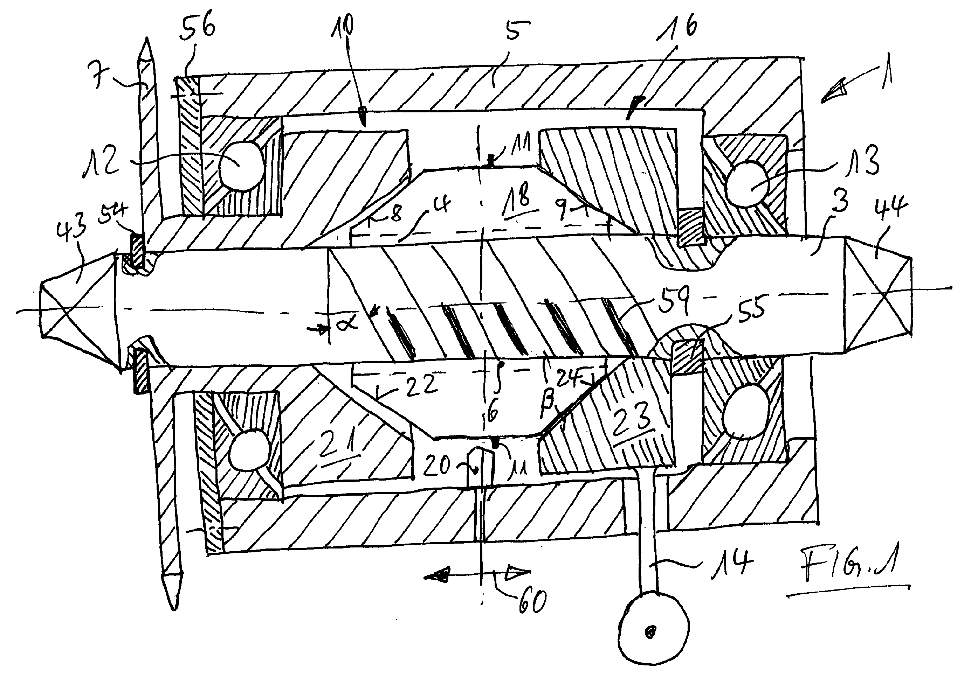

In Fig.1 ist ein Tretlager 1 gezeigt, das in einem Gehäuse 5 eine Tretlagerwelle 3 in Wälzlagern 12, 13 drehbar lagert und axial fixiert. An den Enden der Tretlagerwelle 3 sind pyramidenstumpfförmige Vierkante 43, 44 ausgebildet, die der Befestigung von nicht dargestellten Pedalarmen mit Pedalen dienen. Das Gehäuse 5 ist mit einem Deckel 56 verschlossen und trägt an der Deckelseite ein Zahnritzel 7, dessen Antrieb zwischen der Tretlagerwelle 3 und dem Wälzlager 12 hohlwellenförmig aus dem Gehäuse 5 herausgeführt ist. Der Abtrieb für das Ritzel 7 ist zusätzlich zur Tretlagerwelle 3 und koaxial damit aus dem Gehäuse 5 herausgeführt.

In dem Tretlagergehäuse 5 sind zwei trennbare Kupplungen 10, 16 aufgenommen, die als Konus-Kupplungen ausgebildet sind und die jeweils ein Kupplungselement 21, 23 aufweisen, das aus dem Gehäuse 5 herausgeführt ist und dem Antrieb des Kettenritzels 7 oder eines als Hebel radial aus dem Gehäuse 5 herausgeführten Bremsstranges 14 dienen.

Die Kupplungen haben die Aufgabe, die Drehbewegung der Tretlagerwelle 3 entweder auf das Zahnritzel 7 oder auf den Bremsstrang 14 zu übertragen. Die Kupplungen 10, 16 können nur alternativ das Ritzel 7 oder den als Hebel aus dem Gehäuse 5 herausgeführten Bremsstrang 14, an dessen freiem Ende ein Bowdenzug oder ein Bremszylinder angeschlossen sein können, mit der Tretlagerwelle 3 verbinden. Der hier angesprochene Bremszylinder hat die Funktion einer Pumpe, die Druck und Volumen für die Betätigung der Radbremszylinder liefert.

Die Konuskupplungen 10 und 16 sind mit der Tretlagerwelle 3 über ein Schiffchen 18 verbunden. Das Schiffchen 18 ist auf einem Gewindeabschnitt 59 der Tretlagerwelle 3 drehbar und entsprechend axial in Richtung des Pfeiles 60 verschieblich gelagert. Es ist ein deutliches Gewindespiel 4, 6 vorgesehen, das in Summe mindestens ein Drittel der Gewindetiefe ausmacht. Das Schiffchen 18 trägt in seiner zentralen Bohrung ein entsprechendes Muttergewinde. Das Schiffchen 18 ist als Drehteil ausgebildet, mit zwei Außenkonen 8, 9 als Kupplungselemente 22, 24 an seinen Längsenden. Die Konen 8, 9 verjüngen sich zu den Längsenden des Schiffchens 18 hin. Das Kupplungselement 22 und das Kupplungselement 21 bilden die trennbare Kupplung 10 im wesentlichen. Die Kupplungselemente 23 und 24 bilden entsprechend die Kupplung 16.

Beim Vorwärtstreten der Tretlagerwelle 3 werden die Kupplungselemente 21 und 22 der Konuskupplung 10 miteinander verbunden und beim Rückwärtstreten die Kupplungselemente 23, 24 der Kupplung 16. Beim Vorwärtstreten verschiebt sich das Schiffchen 18 in der Ansicht nach Fig.1 nach links und bildet eine klemmende Verbindung zwischen den Kupplungselementen 21 und 22 der Kupplung 10 und beim Rückwärtstreten der Tretlagerwelle 3 verschiebt sich das Schiffchen 18 nach rechts -- in der Ansicht nach Fig.1.

In der eingekuppelten Stellung der Kupplung 10 dreht die Tretlagerwelle 3 das Zahnritzel 7 schlupffrei. In der eingekuppelten Stellung der Kupplung 16, in der Rücktritt-Situation, stellt das Schiffchen 18 eine drehfeste Verbindung zwischen der Tretlagerwelle 3 und dem Bremsstrang 14 her.

In Fig.1 ist das Schiffchen 18 in einer Kupplungsposition für die Bremskupplung 16 gezeigt. Durch Rückwärtsdrehen der Tretlagerwelle hat sich das Schiffchen 18 in seine rechte Kupplungsposition geschoben. Die Kupplung 16 ist eingekuppelt. Der Bremsstrang 14 ist mit der Tretlagerwelle 3 gekoppelt. Durch Rückwärtstreten am Pedal wird der Rücktritt betätigt.

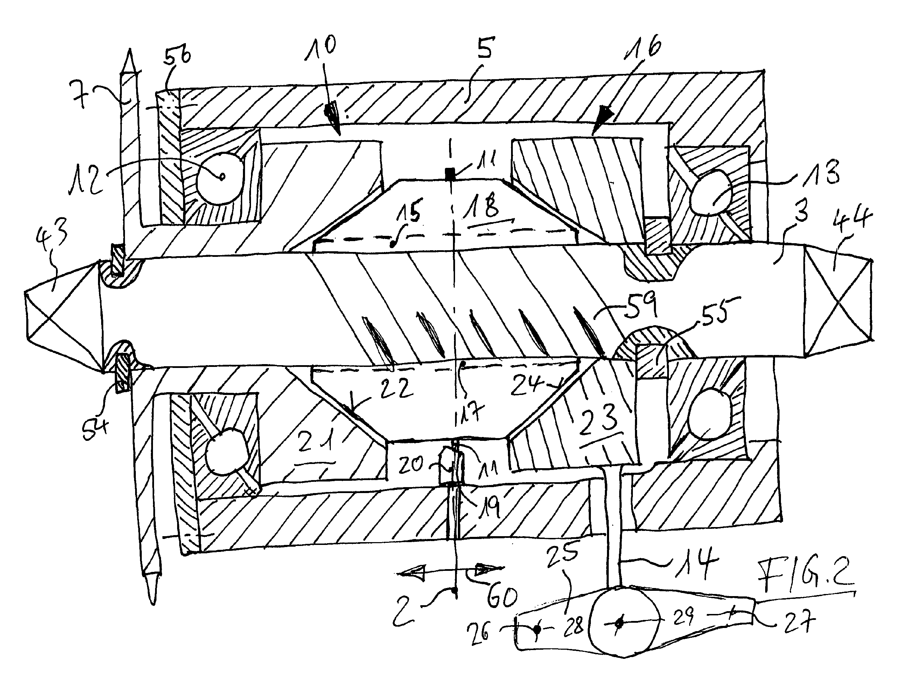

Bei der in Fig.2 gezeigten Stellung ist keine der Kupplungen 10, 16 eingekuppelt. Diese Zwischenposition 2 stellt sich z. B. ein, wenn das Fahrrad aus der Rücktrittposition nach Fig.1 noch ein Stück geschoben und dann abgestellt wird. Das Schiffchen 18 in Fig. 2 kann diverse Zwischenstellungen zwischen den Kupplungen 10 und 16 einnehmen. Es kann mit seinem Eigengewicht auf einem Auflager 20 aufliegen oder rechts oder links davon lose auf den Innenkonen - Flächen 21, 23 aufliegen.

Am freien Ende des Bremsstranges 14 ist eine Bremswippe 25 vorgesehen, die, etwa in ihrer Längsmitte, gelenkig mit dem Bremsstrang 14 verbunden ist. An den freien Enden der Bremswippe 25 sind die Bowdenzüge 26, 27 für die Vorderbremse und die Hinterradbremse angebracht. Der Abstand 28 zwischen der Anbringung des Bowdenzuges 26 für die Vorderradbremse ist wesentlich kürzer als der Abstand 29 des Bowdenzuges 27 vom Befestigungspunkt der Bremswippe 25 am Bremsstrang 14. Dadurch stellt sich ein Bremskraftverhältnis von 60% bis 80% an der Vorderradbremse ein.

In der gezeichneten Stellung des Schiffchens 18 wird durch das Auflager 20 verhindert, daß das Schiffchen 18 mit seinem Konus 22 auf den als Kupplungselement ausgebildeten Innenkonus 21 rutscht. Dabei ist das Schiffchen 18 leicht angehoben, was zu einem vergrößerten Gewindespiel 15 an der Oberseite des Gewindeabschnitts 59 führt und ein verkleinertes Gewindespiel 17 an der Unterseite zeigt. Das Schiffchen 18 ist dabei gegenüber seinen Nachbarpositionen in einer erhöhten Position Durch eine leichte Schräge 19 an der Tragfläche der Stütze 20 mit einer Projektion zur Bremskupplung 16 wird verhindert, daß das Schiffchen 18 ohne Drehung der Tretlagerwelle 3 in den Innenkonus 21 rutscht. Ohne Berührung des Schiffchens 18 mit dem Innenkonus 21 kann das Fahrrad zurückgeschoben werden, ohne daß sich der Pedalarm dreht und ggf. von einem Mittelständer am Fahrrad blockiert wird.

Wenn keine Einwirkung auf die Pedalen erfolgt, oder wenn das Fahrrad antriebs- oder bremsfrei rollt, löst sich automatisch die zuvor benutzte Kupplungsverbindung und das Schiffchen 18 nimmt eine undefinierte Position mit Gewindespiel ein. Um das automatische Lösen der Kupplungsverbindungen sicherzustellen sind die Konuswinkel beta deutlich außerhalb der Selbsthemmung ausgewählt. Der Grenzwinkel für die Selbsthemmung schwankt zwar mit den Reibpartnern, aber mit einem einfachen Konuswinkel beta von ca. 15° lösen sich die Konuskupplungen 10 und 16 automatisch.

Um das Schiffchen 18 zum Fahren oder zum Bremsen in Kupplungskontakt zu bringen bedarf es einer Starthilfe, weil sich das Schiffchen 18 mit der Tretlagerwelle 3 mitdrehen würde, wenn nicht ein retardierendes Moment auf das Schiffchen einwirken würde. Dieses retardierende Moment resultiert bei der Erfindung aus der auf dem Eigengewicht des Schiffchens 18 beruhenden Reibkraft, die sich in Fig.2 zwischen dem Auflager 20 und dem Kragen 11 einstellt.

Der Kragen 11 ist außen am Schiffchen, in dessen Längsmitte angeordnet und weist deshalb einen vergleichsweise großen Hebelarm auf und lagert das Schiffchen 18 ausbalanciert. Das führt zu einem maximalen Reibmoment, das das Schiffchen 18 in seiner Drehlage hält, obwohl sich die mit viel Spiel einliegende Tretlagerwelle 3 dreht. Bei dem aus der Drehung der Tretlagerwelle 3 resultierenden Axialweg in die Kupplung 10 fällt das Schiffchen 18 nach Passieren des Auflagers 20 durch den Kragen 11 vor Erreichen der Kupplungsposition mit seinem Außenkonus 8 mit seinem Eigengewicht auf das als Innenkonus ausgebildete Kupplungselement 21. Dort entsteht ein Reibschluß, der das Schiffchen 18 auch nach Verlassen des Auflagers 20 an einer Eigenrotation relativ zum ruhenden Innenkonus weiterhin hindert, bis es beim kompletten Ineinanderfügen von Außenkonus 8 und dem als Innenkonus ausgebildeten Kupplungselement 21 der Fahrkupplung 10 zum Vollkontakt der Kupplungselemente kommt.

Die winklige Auslegung (Winkel beta) der Fahrkupplung 10, wie auch der Bremskupplung 16, im Zusammenwirken mit der Gewindesteigung (Winkel alpha) führen zu einem in Summe selbsthemmend verspannten Block aus der Tretlagerwelle und dem Zahnritzel 7.

Beim Fahrbetrieb gibt es durch die erfindungsgemäße Tretlagerkonstruktion keine relevanten Reibungsverluste. Das Kupplungselement 23 der Rücktrittkupplung 16 ist gleitend auf der Tretlagerwelle 3 gelagert gezeichnet. Es kann auch an seiner Außenseite im Gehäuse 5, z. B. mit einem Wälzlager, gelagert sein. Schließlich kann das Kupplungselement 23 auch mit einem oder zwei Wälzlagern auf der Tretlagerwelle 3 geführt sein, um die beim normalen Fahrbetrieb auftretende minimale Reibung zu verringern.

Das Kupplungselement 23 für die Rücktrittbremse kann, ähnlich wie das Kupplungselement 21, unter Verlagerung des Wellensicherungsringes 55 auch hohlwellenartig aus dem Gehäuse 5 herausgeführt sein, wodurch der Bremsstrang 14 in etwa spiegelbildlicher Anordnung zum Zahnritzel 7 ausgeführt wäre. Alternativ kann das Kupplungselement 23 auch im Gehäuse geführt und gelagert sein.

Durch die Verwendung von zwei Wellensicherungen 54, 55 auf der Tretlagerwelle 3 ergibt sich ein sehr kurzer Kraftschluß ohne Belastung der Lager 12, 13 aus den Kupplungskräften.

## Patentansprüche

1. Tretlager (1) für Fahrräder mit einer Rücktrittbremse,
mit zwei Kupplungen (10, 16), wovon eine die Tretlagerwelle (3) mit der Rücktrittbremse verbindet und die andere die Tretlagerwelle (3) mit mindestens einem Zahnkranz (7) für die Fahrradkette verbindet, wobei eine oder beide Kupplungen (10, 16) als Konus-Kupplungen ausgebildet sind,die Tretlagerwelle (3) mit einem Schraubgewinde (59) und mit einem dieses einschließenden Schiffchen (18) versehen ist, das ein entsprechendes Innengewinde aufweist und wobei das Schiffchen (18) die beiden Kupplungen (10, 16) alternativ ein- und auskuppelt und wobei das Schiffchen (18) reibschlüssig gegen Mitdrehen mit der Tretlagerwelle (3) gebremst wird,
**dadurch gekennzeichnet, daß**
die reibschlüssige Bremsung des Schiffchens (18) durch die aus dem Eigengewicht des Schiffchens (18) resultierende Reibkraft notwendig gefördert wird.

2. Tretlager (1) nach Anspruch 1, **dadurch gekennzeichnet, daß** das Schiffchen (18) im ausgekuppelten Zustand auf
Kupplungselementen (21, 23) aufliegt.

3. Tretlager (1) nach Anspruch 1 oder 2, **dadurch gekennzeichnet, daß** das Schiffchen (18) in seiner exakt mittigen, neutralen Stellung (Fig.2) auf dem Gehäuse (5) des Tretlagers (1) oder einem daran befestigten Auflager (20) liegt.

4. Tretlager (1) nach einem der vorangegangenen Ansprüche, **dadurch gekennzeichnet, daß** das Schiffchen (18) mit der Tretlagerwelle (3)mit einem Radialspiel (4, 6, 15, 17) in gewindlicher Verbindung steht, wobei das Radialspiel (4, 6, 15, 17) größer ist als ein Viertel der Gewindetiefe.

5. Tretlager (1) nach Anspruch 3 und 4, **dadurch gekennzeichnet, daß** das Auflager (20) dem Schiffchen (18) in seiner neutralen Stellung gegenüber seinen Nachbarpositionen eine erhöhte Position verleiht und das Schiffchen (18) von der Tretlagerwelle (3) im Rahmen seines Spiels (4, 6, 15, 17) abhebt.
